# EUROPÄISCHE PATENTSCHRIFT

(11) **EP 0 391 148 B1**
(45) Veröffentlichungstag und Bekanntmachung des Hinweises auf die Patenterteilung: **01.06.1994**
(21) Anmeldenummer: 90105399.1
(22) Anmeldetag: 22.03.1990
(51) Int. Cl.: B24B 1/00, B24B 23/02, B24B 55/02, B24B 29/00

(54) **Polier- oder Schleifeinrichtung**
Polishing or grinding device
Dispositif de polissage ou de meulage

(30) Priorität: 01.04.1989 DE 3910581; 01.04.1989 DE 3910582; 01.04.1989 DE 3910590
(43) Veröffentlichungstag der Anmeldung: 10.10.1990
(73) Patentinhaber: MESSER GRIESHEIM GMBH, D-60314 Frankfurt (DE); Lübbering, Johannes, D-33442 Herzebrock-Clarholz (DE)
(72) Erfinder: Ihme, Peter, D-4000 Düsseldorf 12 (DE); Lübbering, Johannes, D-4836 Herzebrock (DE); Busse, Jürgen, D-4050 Mönchengladbach 3 (DE); Volker, Wolfgang, D-4154 Tönisvorst 1 (DE); Schmitz, Erwin, D-4154 Tönisvorst 1 (DE)
(74) Vertreter: Berdux, Klaus (DE)

(56) Entgegenhaltungen:
- DE-A- 2 540 216
- DE-C- 3 819 973
- DE-U- 8 806 552
- DE-U- 8 904 020
- DE-U- 8 904 022
- DE-U- 8 904 023
- GB-A- 1 546 590

## Beschreibung

Die Erfindung bezieht sich auf eine Einrichtung der im Oberbegriff des ersten Anspruches angegebenen Art (siehe GB-A-1 546 590).

Aus der DE-C-38 19 973 ist ein Verfahren zum Ausbessern von Lackierfehlern bekannt, bei dem nach dem Schleifen die Fehlstelle von einem Schaumstoffring umgeben und die vom Ring begrenzte Fläche mittels gasförmigen Stickstoffs von ca. -160 °C auf ca. -40 °C abgekühlt wird. Nach Erreichen dieser Temperatur wird mit dem Polieren begonnen. Sobald sich die gekühlte Stelle auf eine Temperatur von ca. -10 °C erwärmt hat, wird der Poliervorgang unterbrochen und es findet eine erneute Abkühlung statt.

Zu diesem diskontinuierlich arbeitenden Verfahren ist zur Verbesserung vorgeschlagen worden, daß das Abkühlen und Polieren gleichzeitig erfolgt. Wie dies durchgeführt werden soll, wurde allerdings nicht geoffenbart.

Dieses diskontinuierliche Verfahren hat den Nachteil, daß es geräte- und zeitmäßig aufwendig ist. Es wird ein Ring zur Abschirmung der Fehlstelle benötigt, es ist ein mehrfaches Abkühlen notwendig und zum Aufbringen des Poliermittels muß die Polierscheibe aus dem Ring herausgenommen werden.

Darüber hinaus ist es aus der DE-A-25 40 216 sowie der GB-A-1 546 590 bekannt, während eines Schleifvorganges in den Bereich zwischen Schleifscheibe und Werkstück ein gasförmiges Tiefkühlmittel bzw. CO₂ zu richten, wobei eine punktuelle Kühlung bewirkt wird.

Aufgabe der Erfindung ist die Schaffung einer leicht handhabbaren Einrichtung, mit der in kontinuierlicher Weise gearbeitet werden kann und mit der eine Flächenkühlung bewirkt wird.

Diese Aufgabe wird erfindungsgemäß durch die Merkmale des Anspruches 1 gelöst. Für die Bearbeitung des Werkstückes, z. B. beim Polieren einer Fehlstelle eines lackierten Werkstückes, z. B. einer Autokarosserie ist es notwendig, daß die zu bearbeitende Stelle auf einer bestimmten Temperatur gehalten wird, damit der Lack nicht weich wird. Eine Messung an der Bearbeitungsstelle ist nur sehr aufwendig möglich. Überraschenderweise wurde festgestellt, daß die Temperatur des Kaltgases am Eintritt in das Bearbeitungswerkzeug ein guter Indikator für die Temperatur an der Stelle des Werkstückes ist, die bearbeitet wird. Eine Erklärung hierfür ist, daß bei einer gleichmäßigen und kontinuierlichen Verteilung des Kaltgasstromes über die gesamte Arbeitszone der Polierscheibe und einem konstanten ausreichendem Kälteangebot die Temperatur an der Arbeitsstelle konstant bleibt. Somit besteht die Möglichkeit, für eine bestimmte Arbeit oder Art von Arbeiten den Kältebedarf pro Zeiteinheit zu ermitteln und durch entsprechende Dosierung des Kaltgasstromes diesen dann bereitzustellen. Neben dem Schleifen und Polieren von lakierten oder anderweitig beschichteten Werkstücken aus Metall, Kunststoff oder Holz findet die Erfindung auch Anwendung beim Schleifen oder Polieren von anderen Flächen.

Das Kälteangebot ist neben der Temperatur von dem Druck des Kaltgasstromes abhängig, der die Gasmenge bestimmt. Hierzu wird erfindungsgemäß vor der Nachheizung im Strömungsweg des Kaltgases ein Drucksensor angeordnet.

Gemäß der Erfindung werden mittels einer Prozeßsteuerung die für die durchzuführenden Arbeit notwendige Temperatur am Eingang des Kaltgasstromes in das Werkstück (Arbeitstemperatur) und der erforderliche Gasdruck ermittelt und eingestellt. Die Steuerung regelt dann die Leistung der Behälterverdampfung und der Nachheizung in Abhängigkeit von den ermittelten Temperatur- und Druck-Werten. Die Regelung dieser Werte führt zu einem wirtschaftlichen Verbrauch an Kaltgas.

Zur Vermeidung einer Temperaturüber- oder -unterschreitung ist gemäß einem weiteren Vorschlag der Erfindung im Strömungsweg des Kaltgases nach der Nachheizung ein weiterer Temperaturfühler angeordnet.

Wichtig für den Betrieb des Bearbeitungswerkzeuges ist es, dieses vor Arbeitsbeginn auf die erforderliche Betriebstemperatur herunterzukühlen. Zusätzlich ist eine Standby-Temperatur vorwählbar, die dann von der Steuerung nach Zeitvorgabe eingestellt wird. Diese Standby-Temperatur ist nicht für den Poliervorgang ausreichend. Sie dient dazu, während einer Pausenzeit mit geringerer Kaltgasmenge und/oder höherer Kaltgastemperatur das Werkzeug kaltzuhalten, um schnell die Arbeitstemperatur zu erreichen.

Um sicher zu sein, daß vor dem Erreichen der Betriebstemperatur nicht bereits mit dem Arbeiten begonnen wird, wird bei Verwendung z. B. eines mit Druckluft betriebenen Bearbeitungswerkzeuges erfindungsgemäß vorgeschlagen, einen Druckdifferenzregler in der Druckluftführung anzuordnen. Dieser Regler hat die Aufgabe, beim Starten des Bearbeitungswerkzeuges und nicht vorhandener Arbeitstemperatur über ein Magnetventil die Luftzufuhr abzuschalten, so daß der Druckluftmotor nicht laufen kann. Die Verwendung von Bearbeitungswerkzeugen mit Elektromotor ist ebenfalls möglich.

Für die Anzeige der eingestellten Arbeitstemperatur ist in der Steuerung eine optische Anzeige vorgesehen. Desgleichen sind optische Anzeigen für die Standby-Temperatur und das Herunterfahren auf Arbeitstemperatur vorgesehen.

Es wurde überraschenderweise auch festgestellt, daß bei Zufuhr von Kaltgas zu dem sich bewegenden Bearbeitungswerkzeug, und zwar im Arbeitsbereich zwischen Bearbeitungswerkzeug und der zu bearbeitenden Stelle, eine gute Verteilung des Kaltgases erreicht wird bei gleichzeitiger Kühlung von Werkzeug und Werkstück. Diese Kühlung erlaubt eine sofortige Bearbeitung ohne Vorkühlung und auch ohne Zwischenkühlung, wie Versuche gezeigt haben.

Eine günstige Möglichkeit der Kaltgaszufuhr besteht darin, daß die Zuführung zentral durch die Antriebswelle des Werkzeugs hindurch, z. B. durch eine Zentralbohrung, erfolgt.

Die Erfindung bezieht sich auf Bearbeitungseinrichtungen, bei denen eine Relativbewegung zwischen Werkzeug und Werkstück stattfindet. Diese Relativbewegung kann in einer Rotation bestehen oder in einer Schwingbewegung, bei der das Werkzeug über das Werkstück hin- und herbewegt wird. Die Erfindung ist in gleicher Weise auf Einrichtungen anwendbar, bei denen das Werkzeug feststeht und das Werkstück eine Relativbewegung gegenüber dem Werkzeug ausführt.

Die Erfindung umfaßt die Anwendung bei scheibenförmigen rotierenden Bearbeitungswerkzeugen und ist gekennzeichnet durch die Anordnung von mindestens einer Öffnung für den Austritt des Kaltgases in den Arbeitsbereich des Werkzeuges. Vorteilhafterweise sind mehrere Öffnungen auf einem Kreis angeordnet.

Eine besonders gute Verteilung des Kaltgases im Arbeitsbereich erreicht man, wenn die Öffnungen schräg nach außen gerichtet sind.

Die Öffnungen bestehen vorteilhafterweise aus leicht herstellbaren Bohrungen. Aber auch eine Ausführung in Form von Schlitzen wird von der Erfindung mit umfaßt.

Eine sehr gleichmäßige Verteilung des Kaltgases wird erreicht, wenn die Öffnungen im Bereich der Nabe des rotierenden Bearbeitungswerkzeuges angeordnet sind.

Hierbei besteht eine besonders einfache Ausführung darin, die Öffnungen in dem Element anzuordnen, mit dem das Bearbeitungswerkzeug auf der Antriebswelle befestigt wird. Wichtig ist, daß die Umlenkung des Kaltgases aus der Öffnung in den Arbeitsbereich derart erfolgt, daß das Kaltgas möglichst den gesamten Arbeitsbereich beaufschlagt.

Der hier verwendete Begriff Kaltgas umfaßt kalte Luft, die in geeigneter Weise auf Temperaturen wesentlich tiefer als -20 °C abgekühlt wird. Vorteilhafterweise wird aber Flüssiggas verwendet, z. B. Flüssigstickstoff mit einer Siedetemperatur von -196 °C oder CO₂ mit einer Siedetemperatur von -79 °C. Auch die Verwendung anderer Flüssiggase ist möglich aber teurer.

Vorteilhaft ist die Verwendung eines Gemisches aus Flüssiggas und Druckluft, wobei das Flüssiggas die erforderliche Kälte enthält.

Der Flüssiggasbehälter ist kälteisoliert ausgebildet und weist zum Verdampfen des flüssigen Kaltgases eine Heizung im Behälter und eine Nachheizung am Auslaß des Behälters im Strömungsweg des Kaltgases auf.

Vor dem Eintritt des Kaltgases in das Bearbeitungswerkzeug ist im Strömungsweg des Kaltgases ein Temperaturfühler angeordnet. Dieser Temperaturfühler ist mit einer Steuerung verbunden, welche die Leistung der Behälterverdampfung und/oder Nachheizung anpaßt, falls sich die Temperatur an dieser Stelle ändert. Dieser Temperaturwert ist ein Indikator für die Arbeitstemperatur an der Arbeitsstelle. Desgleichen ist am Auslaß aus dem Behälter ein Drucksensor im Strömungsweg des Kaltgases angeordnet, der ebenfalls mit der Steuerung verbunden ist und als Indikator für die durchfließende Kaltgasmenge dient.

Zur Einsparung von Flüssiggas ist erfindungsgemäß zwischen Flüssiggastank und Bearbeitungswerkzeug ein Mischbehälter angeordnet, dem Kaltgas und trockene Druckluft zugeordnet wird. Dieses Gemisch wird dann dem Bearbeitungswerkzeug zugeführt.

Einem Kaltgastank oder Mischtank können über entsprechend isolierte Leitungen mehrere Bearbeitungswerkzeuge zugeordnet werden.

Nach einer anderen Ausführung der Erfindung erfolgt die Versorgung eines oder mehrerer Bearbeitungswerkzeuge mittels eines mobilen Zwischentanks, der aus einem größeren Flüssiggaslagertank befüllt wird.

Die den Bearbeitungswerkzeugen zugeordneten Tanks für das können stationär, mobil oder hängend (stationär oder mobil) ausgebildet sein.

In der Zeichnung sind Ausführungsbeispiele der Erfindung dargestellt.

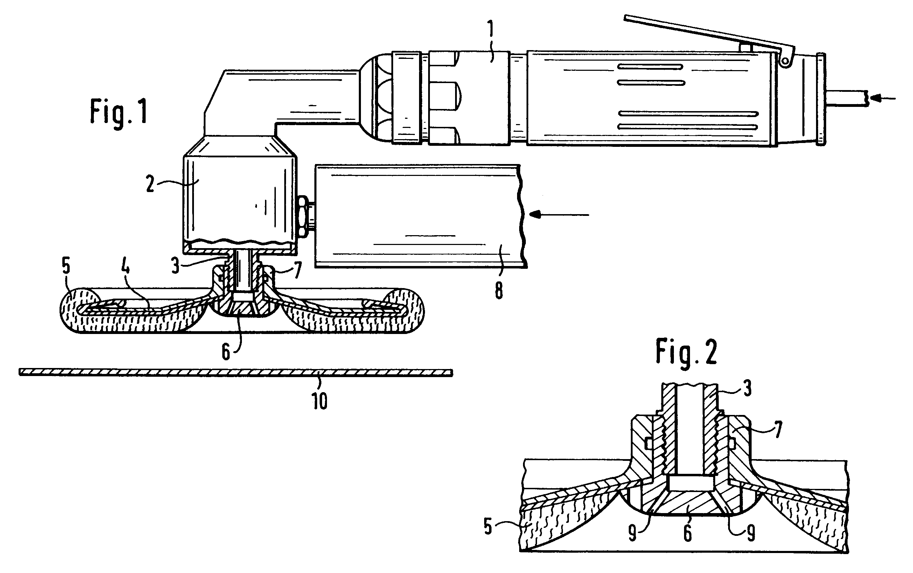

- Fig. 1: zeigt das Bearbeitungswerkzeug oberhalb des Werkstückes,
- Fig. 2: im Ausschnitt die Kaltgaszufuhr,
- Fig. 3: eine stationäre Einrichtung,
- Fig. 4: die Versorung mittels eines mobilen Zwischentanks,
- Fig. 5: zeigt die Steuerung der Einrichtung.

Der Druckluftmotor 1 ist mit einem Winkelkopf 2 versehen, an dessen Abtriebswelle 3 ein Polierteller 4 mit Lammfellhaube 5 befestigt ist. Die Befestigung erfolgt durch eine Mutter 6, die an der Nabe 7 anliegt. Die Kaltgaszufuhr erfolgt über einen isolierten Schlauch 8 und den Winkelkopf 2 in die hohle Welle 3. Von dort gelangt das Kaltgas durch die Bohrungen 9 in die Arbeitszone der Polierscheibe. Die rotierende Lammfellhaube 5 wirkt wie eine einseitig offene Kreiselpumpe durch Schaufelwirkung und Gasreibung. Dadurch wird ständig Gas aus der Arbeitszone herausgefördert und durch neues Kaltgas ersetzt. Dieser Effekt führt überraschenderweise zu einer permanenten Kühlung der Polierscheibe, so daß ohne vorherige Abkühlung des Werkstückes 10 sofort mit dem Polieren begonnen werden kann.

Der Kühleffekt wird noch dadurch unterstützt, daß zum Polieren die Polierscheibe schräg auf die Oberfläche des Werkstückes 10 aufgesetzt wird. Hierdurch wird aus der offenen Kreiselpumpe eine annähernd geschlossene Kreiselpumpe mit verstärktem Anlegeeffekt des Kaltgases in der Arbeitszone. Die zu polierende Oberfläche und die gesamte Polierscheibe werden so ständig gekühlt. Die Kühlung ist dabei völlig ausreichend und eine Unterbrechung des Polierens zum Zwecke erneuter Kühlung des Werkstückes nicht erforderlich.

Ein weiterer Vorteil der Erfindung besteht darin, daß hierbei die Polierscheibe mit Poliermasse getränkt werden kann. Es ist nicht mehr notwendig, die zu polierende Oberfläche mit Poliermasse zu benetzen, was dieses jedoch nicht ausschließt.

Zu beachten ist bei der Auslegung des Bearbeitungswerkzeuges, daß die Ausströmungsgeschwindigkeit des Kaltgases nicht größer ist als die Saugwirkung der rotierenden Polierscheibe.

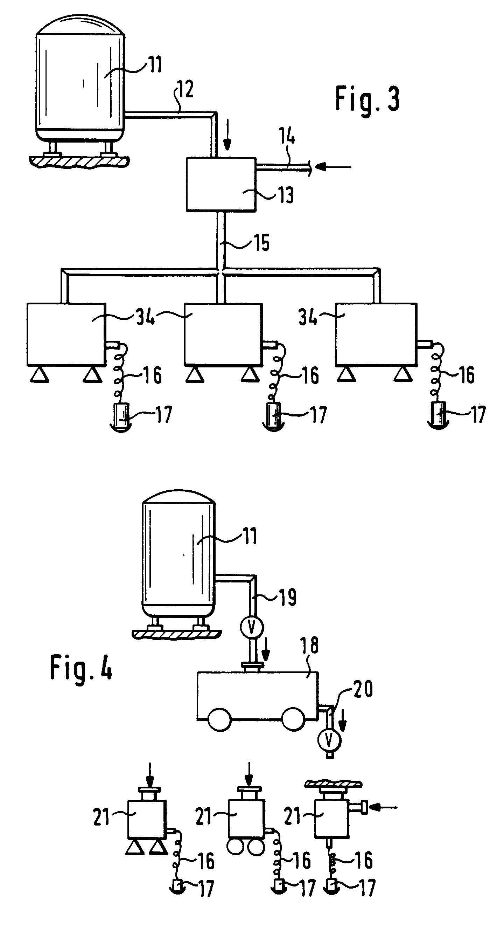

Die stationäre Einrichtung gemäß Fig. 3 besteht aus einem Flüssiggaslagertank 11, von dem eine isolierte Leitung 12 zu einem Mischtank 13 führt. An den Mischtank ist eine Leitung 14 für trockene Druckluft angeschlossen. Vom Mischtank 13 führt ein isoliertes Rohrleitungssystem 15 zu drei kleinen isolierten Tanks 34, an die über isolierte, flexible Verbindungsschläuche 16 die Bearbeitungswerkzeuge 17 angeschlossen sind.

Die Bearbeitungswerkzeuge 17 können bei entsprechenden Arbeitsplatzverhältnissen auch an einen Gemeinschaftstank angeschlossen sein. Es können auch mehrere Bearbeitungswerkzeuge an einen Tank angeschlossen sein.

Bei der Einrichtung gemäß Fig. 4 erfolgt die Versorgung von mehreren Tanks 21 aus dem Haupttank 11 über einen mobilen Zwischentank 18. Dieser wird mittels der Leitung 19 befüllt, die Entleerung erfolgt über die Leitung 20.

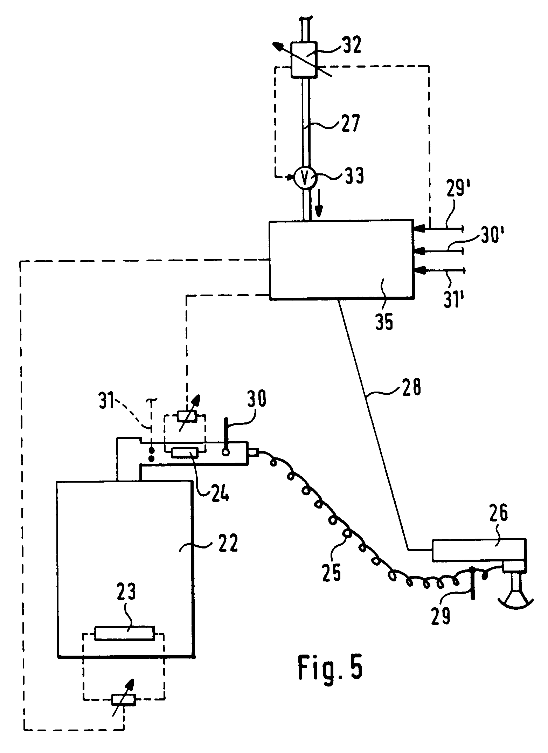

In Fig. 5 ist die erfindunggemäße Steuerung dargestellt. Mit 22 ist ein Flüssiggaslagerbehälter bezeichnet, der mit einer Behälterheizung 23 und einer Nachheizung 24 versehen ist. Das Kaltgas strömt über den Verbindungsschlauch 25 zu dem Bearbeitungswerkzeug 26. Das Werkzeug 26 erhält die Druckluft zum Betreiben des Motors über die Leitungen 27 und 28. Im Schlauch 25 ist vor dem Eintritt in das Werkzeug 26 ein Temperaturfühler 29 angeordnet. Über nicht dargestellte elektrische Leitungen ist dieser Temperaturfühler 29 mit dem Steuerungseingang 29′ verbunden. Ein weiterer Temperaturfühler 30 befindet sich im Strömungsweg nach der Nachheizung 24 angeordnet. Vor der Nachheizung 24 befindet sich der Drucksensor 31. Beide Sensoren sind über nicht dargestellte elektrische Leitungen mit den Steuereingängen 30′ bzw. 31′ verbunden. Der Druckdifferenzregler in der Druckluftleitung 27 ist mit 32 bezeichnet und das von ihm gesteuerte Magnetventil mit 33. Der Regler 32 ist über eine elektrische Leitung mit dem Steuerungseingang 29′ des Temperaturfühlers 29 verbunden.

## Patentansprüche

1. Polier- oder Schleifeinrichtung mit einem Flüssiggaslagertank (21), einem Polier- oder Schleifwerkzeug (17) und einem kälteisolierten Verbindungsschlauch (16) zwischen Lagertank (21) und Werkzeug (17),
dadurch gekennzeichnet, daß
das Werkzeug (17) eine lammfellartige Scheibe (5) aufweist und, daß in dem Werkzeug (17) eine Zuführung (3, 9) angeordnet ist, durch deren im Arbeitsbereich der Scheibe endenden Austritt während des Betriebes des Werkzeuges (17) ein Kaltgasstrom in den lammfellartigen Bereich der Scheibe (5) gerichtet ist.

2. Einrichtung nach Anspruch 1,
dadurch gekennzeichnet, daß
der Lagertank (21) mit einem Haupttank (11) verbunden ist.

3. Einrichtung nach Anspruch 1 oder 2,
dadurch gekennzeichnet, daß
zwischen Lagertank (21) und Werkzeug (17) oder zwischen Haupttank (11) und Lagertank (21) ein Mischbehälter (13) angeordnet ist, dem Kaltgas und Druckluft zugeführt werden.

4. Einrichtung nach einem der Ansprüche 1 bis 3,
gekennzeichnet durch
eine Ausbildung der Lagertanks (21) zur Befüllung aus einem mobilen Zwischentank (18)

5. Einrichtung nach einem der Ansprüche 1 bis 4,
dadurch gekennzeichnet, daß
der Flüssiggaslagertank (21) eine Behälterheizung (23) und eine Nachheizung (24) aufweist und den Heizungen eine Steuerung (35) zugeordnet ist, welche die Leistung der Behälterheizung (23) und der Nachheizung (24) in Abhängigkeit von vorgegebenen Temperatur- und Druckwerten regelt.

6. Einrichtung nach Anspruch 5,
dadurch gekennzeichnet, daß
die Steuerung (35) mit einem ersten Temperaturfühler (29) verbunden ist, der in dem Strömungsweg des Kaltgases vor dem Eintritt des Kaltgases in das Werkzeug (17) angeordnet ist.

7. Einrichtung nach Anspruch 5 oder 6,
dadurch gekennzeichnet, daß
die Steuerung (35) mit einem zweiten Temperaturfühler (30) verbunden ist, der hinter der Nachheizung (24) im Strömungsweg des Kaltgases angeordnet ist.

8. Einrichtung nach einem der Ansprüche 5 bis 7,
dadurch gekennzeichnet, daß
die Steuerung (35) mit einem Drucksensor (31) verbunden ist, der vor der Nachheizung (24) im Strömungsweg des Kaltgases angeordnet ist.

9. Einrichtung nach Anspruch 6,
dadurch gekennzeichnet, daß
der Temperaturfühler (29) mit einem Druckdifferenzregler (32) in der Druckluftzuführung (27) für das Werkzeug (17) in Verbindung steht.

## Claims

1. Polishing and grinding device having a liquid-gas storage tank (21), a polishing or grinding tool (17) and a cold-insulated connecting hose (16) between the storage tank (21) and the tool (17), characterized in that the tool (17) exhibits a lambskin-like disc (5) and in that in the tool (17) there is disposed a supply line (3, 9), through whose outlet terminating in the working region of the disc a cold-gas current is directed, during running of the tool (17), into the lambskin-like region of the disc (5).

2. Device according to Claim 1, characterized in that the storage tank (21) is connected to a main tank (11).

3. Device according to Claim 1 or 2, characterized in that between the storage tank (21) and the tool (17) or between the main tank (11) and the storage tank (21) there is disposed a mixing container (13), to which cold gas and compressed air are supplied.

4. Device according to one of Claims 1 to 3, characterized by a configuration of the storage tanks (21) for filling from a mobile intermediate tank (18).

5. Device according to one of Claims 1 to 4, characterized in that the liquid-gas storage tank (21) exhibits a container heater (23) and an after-heater (24) and the heaters are assigned a control system (35), which regulates the output of the container heater (23) and after-heater (24) in dependence upon pre-specified temperature and pressure values.

6. Device according to Claim 5, characterized in that the control system (35) is connected to a first temperature sensor (29), which is disposed in the flow path of the cold gas before the inlet of the cold gas into the tool (17).

7. Device according to Claim 5 or 6, characterized in that the control system (35) is connected to a second temperature sensor (30), which is disposed behind the after-heater (24) in the flow path of the cold gas.

8. Device according to one of Claims 5 to 7, characterized in that the control system (35) is connected to a pressure sensor (31), which is disposed before the after-heater (24) in the flow path of the cold gas.

9. Device according to Claim 6, characterized in that the temperature sensor (29) is connected to a pressure differential regulator (32) in the compressed air supply line (27) for the tool (17).

## Revendications

1. Installation de polissage ou de ponçage comprenant un réservoir de gaz liquéfié (21), un outil de polissage ou de ponçage (17) et un tuyau de liaison (16) isolé thermiquement, reliant le réservoir de stockage (21) et l'outil (17), caractérisée en ce que :
- l'outil (17) comprend un disque (5) à revêtement de type 〈〈 peau de chamois 〉〉 et en ce que l'outil (17) comporte une alimentation (3, 9) à travers laquelle la sortie qui débouche dans la zone de travail du disque reçoit pendant le fonctionnement de l'outil (17), une veine de gaz froid dans la zone en forme de peau de chamois (5).

2. Installation selon la revendication 1, caractérisée en ce que le réservoir de stockage (21) est relié à un réservoir principal (11).

3. Installation selon la revendication 1 ou 2, caractérisée en ce qu'entre le réservoir (21) et l'outil (17), entre le réservoir principal (11) et le réservoir de stockage (21), se trouve un réservoir mélangeur (13) recevant le gaz froid et l'air comprimé .

4. Installation selon l'une des revendications 1 à 3, caractérisée par une réalisation du réservoir de stockage (21) pour remplir un réservoir intermédiaire (18) mobile.

5. Installation selon l'une des revendications 1 à 4, caractérisée en ce que le réservoir de stockage de gaz liquéfié (21) comprend un moyen de chauffage de réservoir (23) et un réchauffeur (24) une commande (35) étant associée à ces moyens de chauffage pour régler la puissance du chauffage du réservoir (23) et du réchauffeur (24) en fonction de valeurs prédéterminées de température et de pression,.

6. Installation selon la revendication 5, caractérisée en ce que la commande (35) est reliée à une première sonde de température (29) prévue dans le chemin du gaz froid en amont de l'arrivée du gaz froid dans l'outil (17).

7. Installation selon la revendication 5 ou 6, caractérisée en ce que la commande (35) est reliée à une seconde sonde de température (30) prévue dans le chemin du gaz froid en aval du réchauffeur (24).

8. Installation selon l'une des revendications 5 à 7, caractérisée en ce que la commande (35) est reliée à un capteur de pression (31) en amont du réchauffeur (24) dans le chemin du gaz froid.

9. Installation selon la revendication 6, caractérisée en ce que la sonde de température (29) est relié à un régulateur de différence de pression (32) dans l'alimentation en air comprimé (27) de l'outil (17).
